# DEMANDE DE BREVET EUROPEEN

(11) **EP 1 911 621 A1**
(43) Date de publication de la demande: **16.04.2008**
(21) Numéro de dépôt: 07301214.8
(22) Date de dépôt: 09.07.2007
(51) Int. Cl.: B60J 10/00, B60J 10/08

(54) **Joint d'etancheite sur porte pour vehicule**

(30) Priorité: 13.10.2006 FR 0609023
(71) Demandeur: Renault, 92109 Boulogne Billancourt (FR)
(72) Inventeur: Lecchi, Philippe, 78400, CHATOU (FR)

(57) **Abrégé**

L'invention propose un joint (4) destiné à assurer l'étanchéité entre une caisse de véhicule automobile et une portière, comprenant :
-un profilé présentant en section transversale :
-une base (41) sensiblement droite destinée à être fixée à une portière ;
-un contour régulier (42) formant, avec la base (41), un contour fermé, destiné à assurer l'étanchéité avec une caisse de véhicule, et présentant une moitié supérieure (43) et une moitié inférieure (44) reliant la moitié supérieure à la base ;

-dans lequel la moitié supérieure (43) présente une épaisseur sensiblement constante, et au moins une partie (45) de la moitié inférieure (44) partant de la base (41) présente une épaisseur plus importante que la moitié supérieure.

## Description

L'invention concerne les joints d'étanchéité, en particulier les joints destinés à garantir l'étanchéité entre un ouvrant de véhicule et la superstructure ou la caisse.

Un joint connu est initialement de forme tubulaire et présente une section circulaire d'épaisseur sensiblement constante. Un tel joint est habituellement fabriqué par extrusion d'un matériau caoutchouc. Pour poser un tel joint sur une portière, il est connu d'encoller, de clipser ou de chausser une surface du joint et de plaquer cette surface contre le caisson de la portière. La surface de fixation est sensiblement perpendiculaire à la surface extérieure de la portière. Une autre surface du joint est destinée à venir en contact avec la caisse lors de sa fermeture. Ainsi, l'étanchéité au niveau du caisson de portière est garantie. Un tel joint présente des inconvénients. Lorsqu'un joint continu est collé contre le caisson de la portière, il doit épouser la courbure du contour de portière. Le joint est donc courbé autour d'un axe sensiblement perpendiculaire à la portière. Lorsqu'un cintrage est localement important, la surface opposée à la surface de fixation s'en rapproche et provoque l'affaissement de flancs joignant ces surfaces. Le tube du joint s'écrase. La surface d'étanchéité est alors localement déformée et affaissée, ce qui génère un défaut d'étanchéité avec la caisse.

Un autre joint connu comprend plusieurs portions présentant des sections différentes, raccordées entre elles par des surmoulages. Les portions présentant la rigidité la plus importante sont disposées au niveau des cintrages importants. Ainsi, l'affaissement des flancs est compensé par cette portion spécifique. Un tel joint présente un coût élevé.

Il existe ainsi un besoin pour un joint de portière de véhicule automobile présentant un coût réduit tout en garantissant l'étanchéité au niveau de forts cintrages.

L'invention a pour objet un joint destiné à assurer l'étanchéité entre une caisse de véhicule automobile et une portière, comprenant:
- un profilé présentant en section transversale :
   - une base sensiblement droite destinée à être fixée à une portière ;
   - un contour régulier formant, avec la base, un contour fermé, destiné à assurer l'étanchéité avec une caisse de véhicule, et présentant une moitié supérieure et une moitié inférieure reliant la moitié supérieure à la base ;
- dans lequel la moitié supérieure présente une épaisseur sensiblement constante, et au moins une partie de la moitié inférieure partant de la base présente une épaisseur plus importante que la moitié supérieure.

Selon une variante, la base et le contour sont constitués du même matériau.

Selon une autre variante, ledit contour fermé présente une unique alvéole.

Selon encore une variante, ladite partie d'épaisseur plus importante présente une épaisseur décroissant depuis la base jusqu'à la moitié supérieure.

Selon encore une autre variante, ladite partie d'épaisseur plus importante est formée d'une surépaisseur à l'intérieur du contour fermé.

Selon encore une autre variante, ladite partie d'épaisseur plus importante présente une épaisseur moyenne au moins du double de l'épaisseur de la moitié supérieure.

Selon une variante, la moitié supérieure est arquée.

Selon encore une variante, la moitié inférieure relie la moitié supérieure à deux points distants de la base.

L'invention porte également sur une portière de véhicule automobile, comprenant :
- un panneau extérieur ;
- un caisson de portière fixé au panneau extérieur et présentant une surface périphérique sensiblement perpendiculaire au plan moyen du panneau extérieur;
- un joint tel que défini ci-dessus, dont la surface de fixation est fixée contre la surface périphérique du caisson.

L'invention sera mieux comprise et d'autres particularités et avantages apparaîtront à la lecture de la description qui va suivre, la description faisant référence aux dessins annexés parmi lesquels :
- la figure 1 représente une vue en section transversale d'un joint selon un mode de réalisation ;
- la figure 2 illustre le joint de la figure 1 au niveau d'un cintrage important ;
- la figure 3 illustre le joint de la figure 2 assurant l'étanchéité avec une caisse de véhicule ;
- la figure 4 représente une vue de côté d'une portière munie d'un tel joint ;
- la figure 5 est une vue en section transversale de la portière de la figure 4.

L'invention propose un joint destiné à assurer l'étanchéité entre une caisse de véhicule automobile et une portière. L'invention propose un joint présentant une possibilité de déformer une surface du joint opposée à sa surface de fixation (afin de pouvoir suivre une surface de portière présentant localement un cintrage important) tout en limitant l'affaissement de cette surface opposée.

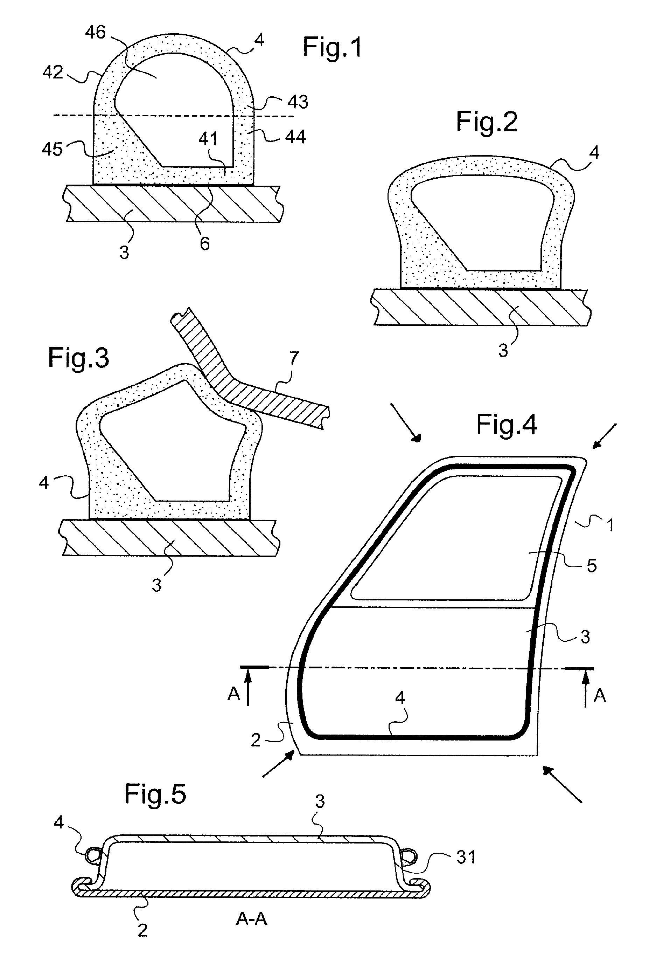

La figure 1 illustre une section transversale d'un joint 4 selon l'invention. Le joint 4 présente un profilé qui peut typiquement être obtenu par extrusion de caoutchouc. Le profilé présente une base 41 et un contour régulier 42. La base 41 et le contour régulier 42 forment un contour fermé. Par contour régulier on entend un contour ne présentant pas de brusques changements de courbure, par exemple un contour ne présentant pas d'inversion de courbure. Un tel contour régulier est apte à limiter l'affaissement du contour 42.

La base 41 est sensiblement droite et est destinée à être fixée à une portière. Dans l'exemple illustré, un film adhésif 6 fixe la base 41 sur une surface d'un caisson de portière 3.

Le contour 42 est destiné à entrer en contact avec une caisse de véhicule afin d'assurer l'étanchéité entre cette caisse et la portière. Le contour 42 présente une moitié supérieure 43, opposée à la base 41. Le contour présente une moitié inférieure 44 reliant la moitié supérieure 43 à deux points distants de la base 41 (deux extrémités de la base dans l'exemple).

La moitié supérieure 43 présente une épaisseur sensiblement constante et est avantageusement arquée. La moitié inférieure 44 présente une partie 45 partant d'une extrémité de la base 41 et présentant une épaisseur plus importante que la moitié supérieure 43. L'épaisseur moyenne de cette partie 45 peut par exemple être au moins égale au double de l'épaisseur de la moitié supérieure 43.

Dans une section transversale du joint 4, une épaisseur locale peut être déterminée de la façon suivante. On détermine le centre de gravité de la section, puis on détermine l'épaisseur de matière d'une paroi rencontrée en partant radialement de ce centre de gravité.

La figure 2 illustre la déformation du joint 4 au niveau d'un cintrage important, le contour 42 étant disposé vers l'extérieur de la courbure (par exemple au niveau des flèches de la figure 4). Du fait d'une épaisseur moindre, la moitié supérieure 43 est apte à se déformer. Du fait de cette épaisseur moindre, la moitié supérieure 43 s'allonge également suivant l'axe du joint 4. De telles déformations permettent donc au joint 4 de s'adapter à de forts cintrages. Par ailleurs, du fait de l'épaisseur plus importante de la partie 45, la moitié inférieure 44 présente une moindre déformation et empêche la moitié supérieure 43 de s'affaisser de manière importante. La section transversale du joint 4 est donc relativement peu modifiée au niveau d'un fort cintrage.

La figure 3 illustre une surface 7 d'une caisse venant en contact avec le joint 4 au niveau d'un fort cintrage. L'affaissement de la moitié supérieure 43 étant empêché, le joint 4 garantit une bonne étanchéité avec la surface 7.

Un tel joint permet de garantir une différence de rigidité entre la moitié supérieure 43 et la moitié inférieure 44 à partir d'une base 41 et d'un contour 42 constitués de manière homogène d'un même matériau. Un tel joint est particulièrement aisé à réaliser par extrusion.

Afin de réduire la complexité et le coût d'un tel joint 4, on peut prévoir que le contour fermé présente une unique alvéole 46.

La partie 45 d'épaisseur plus importante présente avantageusement une épaisseur décroissante depuis la base jusqu'à la moitié supérieure 43. Ainsi, lorsque la surface 7 entre en contact transversalement avec le joint 4, la déformation du joint 4 est mieux répartie afin de garantir un contact optimal du joint 4 avec la surface 7. De plus, la fatigue du joint 4 est ainsi limitée.

Afin de ne pas accroître l'encombrement transversal du joint 4, la partie 45 d'épaisseur plus importante est avantageusement formée d'une surépaisseur à l'intérieur du contour fermé.

Les figures 4 et 5 illustrent une portière 1 munie d'un joint 4 selon l'invention. La portière 1 présente un panneau extérieur 2, et un caisson de portière 3 sur lequel le panneau 2 est fixé. Une vitre 5 est guidée de façon connue en soi par le caisson 3. Le caisson de portière 3 peut être formé d'un assemblage d'une partie tubulaire et d'une partie en tôle. Le caisson 3 présente une surface périphérique 31, sensiblement perpendiculaire au plan moyen du panneau 2. Un joint 4 selon l'invention est fixé contre la surface périphérique 31 du caisson 3 (par exemple par collage).

## Revendications

1. Joint (4) destiné à assurer l'étanchéité entre une caisse de véhicule automobile et une portière, comprenant:
- un profilé présentant en section transversale :
- une base (41) sensiblement droite ;
- un contour régulier (42) formant, avec la base (41), un contour fermé, destiné à assurer l'étanchéité avec une caisse de véhicule, et présentant une moitié supérieure (43) et une moitié inférieure (44) reliant la moitié supérieure à la base ;
**caractérisé en ce que** la moitié supérieure (43) présente une épaisseur sensiblement constante, et **en ce qu'**au moins une partie (45) de la moitié inférieure (44) partant de la base (41) présente une épaisseur plus importante que la moitié supérieure.

2. Joint (4) selon la revendication 1, dans lequel la base et le contour sont constitués du même matériau.

3. Joint (4) selon la revendication 1 ou 2, dans lequel ledit contour fermé présente une unique alvéole (46).

4. Joint (4) selon l'une quelconque des revendications précédentes, dans lequel ladite partie (45) d'épaisseur plus importante présente une épaisseur décroissant depuis la base jusqu'à la moitié supérieure.

5. Joint (4) selon l'une quelconque des revendications précédentes, dans lequel ladite partie d'épaisseur plus importante est formée d'une surépaisseur à l'intérieur du contour fermé.

6. Joint selon l'une quelconque des revendications précédentes, dans lequel ladite partie d'épaisseur plus importante présente une épaisseur moyenne au moins du double de l'épaisseur de la moitié supérieure.

7. Joint selon l'une quelconque des revendications précédentes, dans lequel la moitié supérieure est arquée.

8. Joint selon l'une quelconque des revendications précédentes, dans lequel la moitié inférieure relie la moitié supérieure à deux points distants de la base.

9. Portière (1) de véhicule automobile, comprenant :
- un panneau extérieur (2) ;
- un caisson de portière (3) fixé au panneau extérieur (2) et présentant une surface périphérique (31) sensiblement perpendiculaire au plan moyen du panneau extérieur;
- un joint (4) selon l'une quelconque des revendications précédentes, dont la surface de fixation est fixée contre la surface périphérique du caisson.
